# EUROPÄISCHE PATENTANMELDUNG

(11) **EP 4 706 995 A1**
(43) Veröffentlichungstag der Anmeldung: **11.03.2026**
(21) Anmeldenummer: 25193704.1
(22) Anmeldetag: 04.08.2025
(51) Int. Cl.: B60C 11/11, B60C 11/13

(54) **FAHRZEUGREIFEN**

(30) Priorität: 09.09.2024 DE 102024208523
(71) Anmelder: Continental Reifen Deutschland GmbH, 30175 Hannover (DE)
(72) Erfinder: Javagal Suresh, Swaroop Sharma, 30175 Hannover (DE); Herbst, Stephan, 30175 Hannover (DE); Behr, Ulrich, 30175 Hannover (DE)
(74) Vertreter: Continental Corporation

(57) **Zusammenfassung**

Die Erfindung betrifft einen Fahrzeugreifen mit einem Laufstreifen mit zwei Profilblockreihen (2, 3), wobei Profilblöcke (4, 5) aus der einen Profilblockreihe (2, 3) mittels Blockanbindungen (7) an Profilblöcke (4, 5) aus der anderen Profilblockreihe (2, 3) angebunden sind, wobei radial außerhalb jeder Blockanbindung (7) eine Rillenverengung (R*) verbleibt.

Die Blockanbindung (7) ist aus einer Grundanhebung (7b) und einem an den einen Profilblock (4) angrenzenden, von diesem vorspringenden, abgeschrägten Blockansatz (7a) gebildet,
wobei die Rillenverengung (R*) am abgeschrägten Blockansatz (7a) durch eine Ansatzflanke (7a') begrenzt ist, welche aus einem gerade sowie zur radialen Richtung unter einem ersten Winkel (ε₁) verlaufenden, radial inneren Ansatzflankenabschnitt (7a'₁) und einem aus einem gerade sowie zur radialen Richtung unter einem zweiten Winkel (ε₂) verlaufenden, radial äußeren Ansatzflankenabschnitt (7a'₂) zusammengesetzt ist, wobei der erste Winkel (ε₁) 10° bis 30° beträgt und der zweite Winkel (ε₂) um 5° bis 30° größer ist als der erste Winkel (ε₁).

## Beschreibung

Die Erfindung betrifft einen Fahrzeugreifen mit einem Laufstreifen mit zumindest zwei in axialer Richtung nebeneinander verlaufenden Profilblockreihen mit jeweils in Umfangsrichtung aufeinanderfolgenden Profilblöcken, welche von zumindest abschnittsweise auf die Profiltiefe reichenden, rillenartigen Profilnegativen begrenzt und voneinander getrennt sind, wobei Profilblöcke aus der einen Profilblockreihe mittels Blockanbindungen an Profilblöcke aus der anderen Profilblockreihe angebunden sind, wobei radial außerhalb jeder Blockanbindung von den rillenartigen Profilnegativen eine Rillenverengung verbleibt, welche an ihrer radial äußeren Peripherie am Profilblock aus der einen Profilblockreihe und am Profilblock aus der anderen Profilblockreihe jeweils eine knickfrei verlaufende Begrenzungskante sowie ferner eine zu den Begrenzungskanten in Draufsicht übereinstimmend beabstandete, insbesondere gerade verlaufende Mittellinie aufweist,
wobei die Blockanbindung eine Grundanhebung mit einer Deckfläche umfasst, welche, im in Draufsicht senkrecht zur Mittellinie der Rillenverengung verlaufenden Schnitten betrachtet, gerade sowie zur radialen Richtung unter einem von 90° um bis zu 5° abweichenden Winkel verläuft.

Ein derartiger Fahrzeugreifen ist beispielsweise aus der DE 10 2008 024 075 A1 bekannt. Gemäß einem Ausführungsbeispiel weist der Fahrzeugreifen einen Laufstreifen mit Umfangsrillen auf, welche Profilblockreihen voneinander trennen. In einer der Umfangsrillen sind als Abriebindikatoren wirkende Blockanbindungen ausgebildet, welche Profilblöcke aus der einen Profilblockreihe an Profilblöcke aus der anderen Profilblockreihe anbinden. Radial außerhalb jeder Blockanbindung verbleibt eine Rillenverengung mit Begrenzungskanten an den Profilblöcken. Die Blockanbindung setzt sich, in Draufsicht betrachtet, aus quer zur Mittellinie der Rillenverengung aufeinanderfolgenden Grundanhebungen mit je einer parallel zur Laufstreifenperipherie, daher zur radialen Richtung unter einem Winkel von 90°, verlaufenden Deckfläche zusammen, wobei sich die Deckflächen in ihrer Größe und Form unterscheiden sowie in verschiedenen Abständen zum Niveau des Rillengrunds befinden. Solche Blockanbindungen sollen den jeweiligen Abriebzustand leicht erkennen lassen und die Aquaplaningperformance des Reifens nicht beeinträchtigen.

Bei Fahrzeugreifen der eingangs genannten Art sorgen die Blockanbindungen ferner für eine geringfügige gegenseitige Versteifung und Stabilsierung der Profilblöcke, wobei die damit verbundenen Vorteile im Hinblick auf die Handling- und Bremsperformance des Reifens noch nicht im gewünschten Ausmaß auftreten. Da die Blockanbindungen jeweils mit einer lokalen Rillenverengung einhergehen, sind deren Auswirkungen auf das Aquaplaningverhalten stets zu berücksichtigen.

Der Erfindung liegt daher die Aufgabe zugrunde, bei Fahrzeugreifen der eingangs genannten Art die Handling- und Bremsperformance unter Aufrechterhaltung eines guten Aquaplaningverhaltens weiter zu verbessern.

Gelöst wird die gestellte Aufgabe erfindungsgemäß dadurch,
dass die Blockanbindung, in Draufsicht betrachtet, senkrecht zur Erstreckung der Mittellinie der Rillenverengung aus der Grundanhebung und einem an den einen Profilblock angrenzenden, von diesem vorspringenden, abgeschrägten Blockansatz gebildet ist,
wobei die Rillenverengung, in in Draufsicht senkrecht zu ihrer Mittellinie sowie im Bereich der Deckfläche der Grundanhebung verlaufenden Querschnitten betrachtet, am abgeschrägten Blockansatz durch eine Ansatzflanke begrenzt ist, welche aus einem gerade sowie zur radialen Richtung unter einem ersten Winkel verlaufenden, radial inneren Ansatzflankenabschnitt und einem aus einem gerade sowie zur radialen Richtung unter einem zweiten Winkel verlaufenden, radial äußeren Ansatzflankenabschnitt zusammengesetzt ist, wobei der erste Winkel 10° bis 30° beträgt und der zweite Winkel um 5° bis 30° größer ist als der erste Winkel.

Der Blockansatz mit der speziell gestalteten, fasenartigen Ansatzflanke aus zwei Ansatzflankenabschnitten sorgt für eine verbesserte Abstützung der Profilblöcke durch die Blockanbindung, sodass die Profilblöcke wirkungsvoller als bisher gegeneinander versteift und derart die Handling- und Bremsperformance verbessert sind bzw. ist. Zusätzlich bleibt - bedingt durch die Neigung der Ansatzflankenabschnitte - im Bereich der Rillenverengung ein derart großes Leervolumen erhalten, dass weiterhin ein gutes Aquaplaningverhalten gegeben ist.

Gemäß einer bevorzugten Ausführung beträgt der Winkel, unter welchem der radial inneren Ansatzflankenabschnitt verläuft, 13° bis 26°, insbesondere 14° bis 25°. Ein derart gewinkelter, radial innerer Ansatzflankenabschnitt ist im Hinblick auf die Abstützung der Profilblöcke günstig und trägt derart zu einer zusätzlichen Verbesserung der Handling- und Bremsperformance bei.

Gemäß einer weiteren bevorzugten Ausführung ist der zweite Winkel, unter welchem der radial äußere Ansatzflankenabschnitt verläuft, um 7° bis 20°, insbesondere um 10° bis 15°, größer ist als der erste Winkel, unter welchem der radial innere Ansatzflankenabschnitt verläuft. Dies sorgt für einen besonders vorteilhafte Balance zwischen der Handling- und Bremsperformance sowie dem Aquaplaningverhalten.

Im Hinblick auf das Wasserdrainageverhalten im Bereich der Rillenverengung ist es vorteilhaft, wenn die Rillenverengung eine in Draufsicht senkrecht zur Mittellinie sowie zwischen ihren Begrenzungskanten ermittelte, insbesondere konstante Breite von 5,00 mm bis 12,00 mm, vorzugsweise von 5,50 mm bis 10,00 mm, besonders bevorzugt von bis zu 8,00 mm, aufweist. Diese Maßnahme trägt zur Aufrechterhaltung eines guten Aquaplaningverhaltens bei.

Gemäß einer weiteren bevorzugten Ausführung weist die Grundanhebung, in Draufsicht betrachtet, eine parallel zur Mittellinie der Rillenverengung ermittelte, an ihrem radial inneren Ende vorliegende, maximale Länge von 4,00 mm bis 10,00 mm, insbesondere von 6,00 mm bis 8,00 mm, auf. Eine solche Grundanhebung ist im Hinblick auf die gegenseitige Abstützung der Profilblöcke und daher für die Handling- und Bremsperformance günstig und trägt gleichzeitig zur Aufrechterhaltung eines guten Aquaplaningverhaltens in der Rillenverengung bei.

In diesem Zusammenhang ist es ferner vorteilhaft, wenn bei der letztgenannten Ausführung die Deckfläche der Grundanhebung, in Draufsicht betrachtet, eine parallel zur Mittellinie der Rillenverengung ermittelte Länge von 40% bis 60%, insbesondere von 45% bis 55%, der maximalen Länge der Grundanhebung aufweist.

Die beiden nachfolgend angeführten, weiteren bevorzugten Ausführung tragen ebenfalls jeweils dazu bei, die Handling- und Bremsperformance unter Aufrechterhaltung eines guten Aquaplaningverhaltens weiter zu verbessern.

Gemäß einer diesbezüglichen, ersten weiteren bevorzugten Ausführung ist vorgesehen, dass die Deckfläche der Grundanhebung zum Niveau der Profiltiefe einen in radialer Richtung als kleinstmöglichen Abstand ermittelten, insbesondere konstanten Abstand von 2,00 mm bis 5,00 mm, bevorzugt von 3,00 mm bis 4,0 mm, aufweist, wobei der Abstand zusätzlich insbesondere höchstens 50%, vorzugsweise höchstens 40%, besonders bevorzugt höchstens 35%, der Profiltiefe beträgt.

Eine diesbezüglich, zweite weitere bevorzugte Ausführung besteht darin, dass der radial innere Ansatzflankenabschnitt und der radial äußere Ansatzflankenabschnitt an einer in Draufsicht gerade verlaufenden Anschlusskante aneinander anschließen,
- welche in einer gegenüber dem Niveau der Blockaußenflächen der Profilblöcke in radialer Richtung ermittelten Tiefe von 2,00 mm bis 3,00 mm verläuft und/oder
- welche eine Länge von 80% bis 120%, insbesondere von 90% bis 110%, der maximalen Länge der Grundanhebung aufweist.

Gemäß einer weiteren bevorzugten Ausführung weist der radial innere Ansatzflankenabschnitt die Form eines Trapezes, insbesondere eines gleichschenkeligen Trapezes, auf, wobei die Trapezbasis am radial äußeren Ansatzflankenabschnitt liegt und die kürzere Grundseite des Trapezes der Deckfläche der Grundanhebung zugewandt ist. Mit fortlaufendem Abrieb wird der radial innere Ansatzflankenabschnitt an seinem radial äußeren Ende somit kontinuierlich kürzer, sodass in dieser Hinsicht dem sich verringernden Volumen der Rillenverengung entgegengewirkt wird, was zur Aufrechterhaltung eines guten Aquaplaningverhaltens beträgt. Das Ausmaß der versteifenden Wirkung des Blockansatzes auf die Profilblöcke verringerte sich bei dieser Ausführung mit fortlaufendem Abrieb, was jedoch durch die ohnehin zunehmende Steifigkeit der Profilblöcke ausgeglichen wird, sodass die verbesserte Handling- und Bremsperformance aufrecht erhalten bleibt.

Eine gleichermaßen für die Handling- und Bremsperformance und die Aufrechterhaltung eines guten Aquaplaningverhaltens vorteilhafte Ausführung besteht darin,
dass die Grundanhebung durch die Deckfläche sowie an diese anschließende und ausgehend von dieser in Richtung zum Niveau der Profiltiefe verlaufende Seitenflächen begrenzt ist und
dass der abgeschrägte Blockansatz durch die Ansatzflanke und zwei jeweils zwischen dem radial inneren Ansatzflankenabschnitt und den Seitenflächen der Grundanhebung verlaufenden Ansatzseitenflächen mitbegrenzt bzw. begrenzt ist.

Für die versteifende Wirkung der Grundanhebung, welche Teil des Blockansatzes ist, ist es von Vorteil, wenn der Winkel, unter welchem die Deckfläche der Grundanhebung, im in Draufsicht senkrecht zur Mittellinie der Rillenverengung verlaufenden Schnitten betrachtet, verläuft, 90° beträgt.

Gemäß einer weiteren vorteilhaften Ausführung verläuft die Rillenverengung zwischen zwei in Draufsicht vorspringenden, trapezförmigen Blockrandbereichen mit blockinnenseitig liegenden Trapezbasen, wobei die Begrenzungskanten der Rillenverengung den Trapezbasen gegenüberliegen. Die trapezförmigen Blockrandbereiche zeigen im Hinblick auf die versteifende Wirkung der radial innerhalb der Rillenverengung liegenden Blockanbindung einen synergistischen Effekt, wodurch die Handling- und Bremsperformance nochmals weiter verbessert ist.

Gemäß einer weiteren bevorzugten Ausführung ist vorgesehen, dass die trapezförmigen Blockrandbereiche, in Draufsicht betrachtet,
- eine senkrecht zur zugehörigen Trapezbasis sowie zwischen der Trapezbasis und der Begrenzungskante der Rillenverengung ermittelte, maximale Breite von 2,00 mm bis 4,00 mm und/oder
- eine entlang der Trapezbasis ermittelte, maximale Länge von 120% bis 180%, insbesondere von 130% bis 165%, der Länge der Anschlusskante aufweisen. Derart ausgelegte, trapezförmige Blockrandbereiche verstärken den erwähnten, synergistischen Effekt.

Für die Handling- und Bremsperformance ist es zudem vorteilhaft, wenn die Rillenverengung, im in Draufsicht senkrecht zu ihrer Mittellinie sowie im Bereich der Deckfläche der Grundanhebung verlaufenden Querschnitten betrachtet, am anderen Profilblock durch eine dem abgeschrägten Blockansatz gegenüberliegende Blockflanke begrenzt ist, welche gerade sowie zur radialen Richtung unter einem konstanten Winkel von 10° bis 30°, insbesondere von 13° bis 26°, bevorzugt von 14° bis 25°, verläuft, wobei der Winkel, unter welchem die Blockflanke verläuft, vom ersten Winkel, unter welchem der radial inneren Ansatzflankenabschnitt verläuft, vorzugsweise um höchstens 5° abweicht, besonders bevorzugt mit diesem übereinstimmt.

Gemäß einer noch weiteren bevorzugten Ausführung sind die zwei Profilblockreihen eine halbmittige Profilblockreihe mit halbmittigen Profilblöcken und eine schulterseitige Profilblockreihe mit schulterseitigen Profilblöcken, wobei der abgeschrägte Blockansatz der Blockanbindung an einen halbmittigen Profilblock angrenzt und wobei bevorzugt halbmittige Profilblöcke vorgesehen sind, welche jeweils an zwei schulterseitige Profilblöcke mit je einer der Blockanbindungen angebunden sind. Die derart geschaffenen Makroblockstrukturen sind im Hinblick auf den Zielkonflikt zwischen der Handling- und Bremsperformance und dem Aquaplaningverhaltens besonders vorteilahft.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Ausschnitt eines in die Ebene abgewickelten Laufstreifens eines Fahrzeugluftreifens mit einer Ausführungsvariante der Erfindung,
Fig. 2 einen Schnitt entlang der Linie II-II der Fig. 1,
Fig. 3 eine Draufsicht auf das Detail Z₃ der Fig. 1,
Fig. 4 einen Schnitt entlang der Linie IV-IV der Fig. 3,
Fig. 5 eine Schrägansicht auf das Detail der Fig. 3 gemäß der durch den Pfeil S₅ angedeuteten Sichtrichtung und
Fig. 6 einen perspektivischen Schnitt entlang der Linie VI-VI der Fig. 3.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter), SUVs oder Nutzfahrzeuge, insbesondere LKWs, sowie vorzugsweise Fahrzeugluftreifen, besonders bevorzugt Fahrzeugluftreifen in Radialbauart.

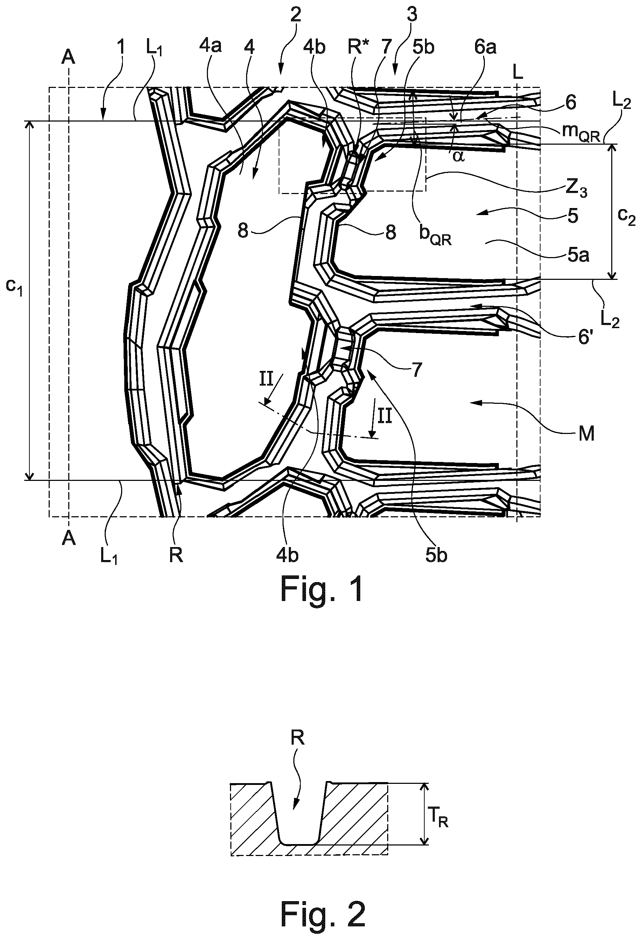

Fig. 1 zeigt eine Draufsicht auf einen Ausschnitt im Bereich einer Hälfte eines in die Ebene abgewickelten Laufstreifens eines Fahrzeugluftreifens, welcher für einen PKW, einen Van oder einen SUV vorgesehen ist. Die Reifenäquatorialebene ist durch eine Linie A-A und der eine seitliche Rand der Bodenaufstandsfläche des Laufstreifens (ermittelt mit einem auf einer Normfelge montierten Reifen, Last bei 70% der maximalen Tragfähigkeit, Innendruck 85% des Normdrucks, gemäß ETRTO-Standards) ist durch eine Linie L gekennzeichnet.

Der Laufstreifen weist eine in Fig. 1 lediglich angedeutet, von der Reifenäquatorialebene geschnittene, zentrale Profilrippe 1, eine halbmittige Profilblockreihe 2 und eine schulterseitige Profilblockreihe 3 auf. Die nicht gezeigte Laufstreifenhälfte ist in Draufsicht vorzugsweise um 180° gedreht zur gezeigten Laufstreifenhälfte ausgeführt.

Wie nachfolgend genauer erläutert wird, weist die halbmittige Profilblockreihe 2 in Umfangsrichtung aufeinanderfolgende, halbmittige Profilblöcke 4 und die schulterseitige Profilblockreihe 3 in Umfangsrichtung aufeinanderfolgende, schulterseitige Profilblöcke 5 auf, wobei an jedem halbmittigen Profilblock 4 zwei schulterseitige Profilblöcke 5 mittels je einer lokalen Blockanbindung 7 angebunden sind und derart gemeinsam eine Makroblockstruktur M bilden.

Jeder halbmittige Profilblock 4 ist, in Draufsicht betrachtet, in Umfangsrichtung langgestreckt sowie von einer Rillenabfolge R umlaufen und daher von dieser begrenzt, weist eine an der Laufstreifenperipherie liegende Blockaußenfläche 4a sowie, in Draufsicht betrachtet, eine an der Blockaußenfläche 4a ermittelte, in die Umfangsrichtung projizierte Länge c₁ auf, welche zwischen zwei durch die in Umfangsrichtung am weitesten voneinander beabstandeten Stellen der Blockaußenfläche 4a sowie in axialer Richtung verlaufenden Begrenzungslinien L₁ ermittelt ist und 70,0 mm bis 100,0 mm beträgt.

Die Rillenabfolge R reicht in radialer Richtung auf die von den jeweiligen Fahrzeugreifen vorgesehene Profiltiefe T_{R} (Fig. 2), welche bekannter Weise jene Tiefe ist, nach welcher sich die jeweils gesetzlich vorgeschriebene Mindestprofiltiefe innerhalb der EU richtet und welche für Personenkraftwagen, Vans und SUVs üblicherweise 6,50 mm bis 13,00 mm und für Nutzfahrzeugreifen üblicherweise 12,00 mm bis 26,00 mm beträgt.

Die schulterseitigen Profilblöcke 5 sind durch in Draufsicht parallel zueinander verlaufende, jeweils in die Rillenabfolge R einmündende Querrillen 6, 6' voneinander getrennt, wobei in Umfangsrichtung eine in Draufsicht von einer der Begrenzungslinien L₁ geschnittene Querrille 6 abwechselnd auf eine von keiner Begrenzungslinie L₁ geschnittene, sich daher im Bereich zwischen zwei Begrenzungslinien L₁ befindliche Querrille 6' folgt, sodass die jeweils zwei schulterseitigen Profilblöcke 5, welche mit einem halbmittigen Profilblock 4 eine Makroblockstruktur M bildenden, innerhalb der beiden Begrenzungslinien L₁ liegen.

Jede Querrille 6, 6' ist in radialer Richtung durch einen Rillengrund 6a begrenzt, weist, jeweils in Draufsicht betrachtet, eine in ihre Längserstreckung ausgerichtete, gerade sowie mittig bezüglich des Rillengrunds 6a verlaufende Rillenmittellinie m_{QR}, eine senkrecht zur Rillenmittellinie m_{QR} ermittelte, maximale Breite b_{QR} (Breite an der breitesten Stelle) von 3,0 mm bis 10,0 mm, insbesondere von 4,0 mm bis 8,0 mm, und in radialer Richtung eine maximale Tiefe (Tiefe an der tiefsten Stelle) von 70% bis 100%, insbesondere von 100%, der Profiltiefe T_{R} (Fig. 2) auf und verläuft, in Draufsicht betrachtet und bezogen auf die Rillenmittellinie m_{QR}, zumindest im Bereich innerhalb der Bodenaufstandsfläche zur axialen Richtung unter einem Winkel α von 0° bis 5°.

Jeder schulterseitige Profilblock 5 weist eine an der Laufstreifenperipherie liegende Blockaußenfläche 5a sowie, in Draufsicht betrachtet, eine an der Blockaußenfläche 5a ermittelte, in die Umfangsrichtung projizierte Länge c₂ auf, welche zwischen zwei durch die in Umfangsrichtung am weitesten voneinander beabstandeten Stellen der Blockaußenfläche 5a sowie in axialer Richtung verlaufende Begrenzungslinien L₂ ermittelt ist und 30% bis 50%, insbesondere 35% bis 45%, der in die Umfangsrichtung projizierten Länge c₁ des zur selben Makroblockstruktur M gehörenden, halbmittigen Profilblocks 4 beträgt.

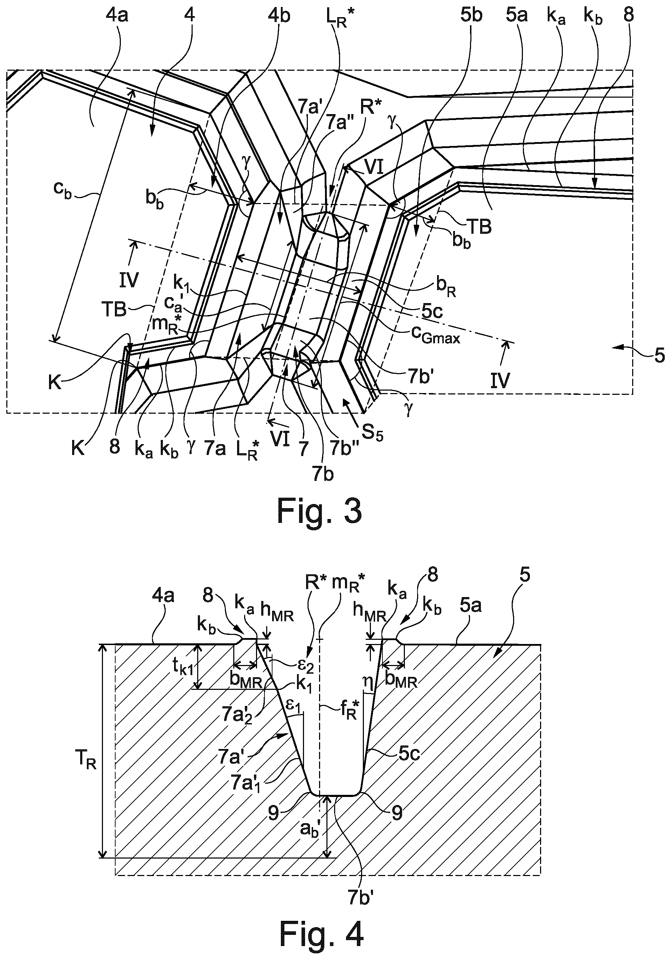

Beim gezeigten Ausführungsbeispiel ist auf den Profilblöcken 4, 5 angrenzend an den Rand der Blockaußenfläche 4a, 5a jeweils eine gegenüber dem Niveau der Blockaußenfläche 4a, 5a in radialer Richtung erhabene Mikrorippe 8 ausgebildet. Die Blockaußenfläche 4a ist von der entsprechenden Mikrorippe 8 zumindest abschnittsweise umlaufen, insbesondere komplett umlaufen. Die Blockaußenfläche 5a ist entlang der Rillenabfolge R und entlang der Querrillen 6, 6' von der Mikrorippe 8 zumindest abschnittsweise, insbesondere komplett, umgeben. Wie Fig. 3 zeigt, weist jede Mikrorippe 8 eine Vielzahl aneinander anschließender, blockaußenseitiger Begrenzungskanten kₐ und eine Vielzahl aneinander anschließender, blockaußeninnenseitiger Begrenzungskanten k_{b} auf, wobei die Begrenzungskanten kₐ, k_{b} übereinstimmende, konstante Abstände zur Blockaußenfläche 4a bzw. 5a aufweisen (Fig. 4), in Draufsicht jeweils knickfrei, beim Ausführungsbeispiel in Draufsicht jeweils gerade, verlaufen und an Knickstellen K aneinander anschließen. Gemäß Fig. 4 weist jede Mikrorippe 8 eine gegenüber dem Niveau der Blockaußenfläche 4a bzw. 5a in radialer Richtung ermittelte, im Bereich zwischen den Begrenzungskanten kₐ, k_{b} konstante, maximale Höhe h_{MR} (Höhe an der höchsten Stelle) von 0,20 mm bis 0,50 mm und an ihrer am Niveau der Blockaußenfläche 4a liegenden Basis eine in Draufsicht senkrecht zu den Begrenzungskanten kₐ, k_{b} ermittelte (vergl. Lage der Linie IV-IV in Fig. 3), konstante Breite b_{MR} von 0,70 mm bis 1,20 mm auf.

Gemäß Fig. 1 ist die Makroblockstruktur M - wie bereits erwähnt - von einen halbmittigen Profilblock 4 und zwei je über eine lokale Blockanbindung 7 an diesen angebundene, schulterseitige Profilblöcke 5 gebildet, wobei radial außerhalb jeder Blockanbindung 7 von der Rillenabfolge R je eine lokale Rillenverengung R* verbleibt. Jede Blockanbindung 7 und damit jede Rillenverengung R* ist zwischen einem in Draufsicht vorspringenden, trapezförmigen Blockrandbereich 4b des halbmittigen Profilblocks 4 und einem diesen gegenüberliegenden, in Draufsicht vorspringenden, trapezförmigen Blockrandbereich 5b des jeweiligen schulterseitigen Profilblocks 5 ausgebildet.

Gemäß Fig. 3 weisen die trapezförmigen Blockrandbereiche 4b, 5b jeweils eine in Draufsicht blockinnenseitig liegende Trapezbasis TB (längere Grundseite des Trapezes) auf und umfassen die an der lokalen Rillenverengung R* liegende, die kürzere Grundseite des Trapezes bildende, der Trapezbasis TB gegenüberliegende, blockaußenseitige Begrenzungskante kₐ, wobei die Trapezbasis TB, in Draufsicht betrachtet, parallel oder im Wesentlichen parallel zu dieser blockaußenseitigen Begrenzungskante kₐ verläuft. "Im Wesentlichen parallel" bedeutet, dass die entsprechende blockaußenseitige Begrenzungskante kₐ und die Trapezbasis TB, in Draufsicht betrachtet, zur Umfangsrichtung jeweils unter einem Winkel verlaufen, wobei der Winkel, unter welchem die Begrenzungskante kₐ verläuft, vom Winkel, unter welchem die Trapezbasis TB verläuft, höchstens um 5° abweicht. Die trapezförmigen Blockrandbereiche 4b, 5b umfassen ferner zwei je einen der Trapezschenkel bildende, blockaußenseitige Begrenzungskante kₐ. Die an der lokalen Rillenverengung R* liegende, die kürzere Grundseite des Trapezes bildende, blockaußenseitige Begrenzungskante kₐ schließt, in Draufsicht betrachtet, mit den je einen Trapezschenkel bildenden, blockaußenseitigen Begrenzungskante kₐ jeweils einen über die Blockaußenfläche 4a, 5a ermittelten, stumpfen Winkel γ von 110° bis 150° ein. Die trapezförmigen Blockrandbereiche 4b, 5b weisen, in Draufsicht betrachtet, jeweils eine senkrecht zur Trapezbasis TB sowie zwischen der Trapezbasis TB und der die kürzere Grundseite des Trapezes bildenden, blockaußenseitigen Begrenzungskante kₐ ermittelte, maximale Breite b_{b} (Breite an der breitesten Stelle) von 2,0 mm bis 4,0 mm und ein entlang der Trapezbasis TB ermittelte, maximale Länge c_{b} (Länge an der längsten Stelle, nur bei Blockrandbereich 4b eingezeichnet) auf, wobei auf die Größe der maximalen Länge c_{b} noch eingegangen wird.

Die Rillenverengung R* ist an ihrer radial äußeren Peripherie durch die die kürzeren Grundseiten der Trapeze bildenden, blockaußenseitigen Begrenzungskanten kₐ der Mikrorippen 8 begrenzt (vergl. Fig. 4), wobei die Rillenverengung R*, in Draufsicht betrachtet, an zwei die Enden dieser blockaußenseitigen Begrenzungskanten kₐ verbindenden, gerade und kreuzungsfrei verlaufenden Begrenzungslinien L_{R}* endet, eine an ihrer radial äußeren Peripherie liegende, in Draufsicht übereinstimmend zu diesen blockaußenseitigen Begrenzungskanten kₐ beabstandete, gerade verlaufende, an den Begrenzungslinien L_{R}* endende Mittellinie m_{R}*, eine an diese anschließende in radialer Richtung verlaufende Mittelfläche f_{R}* (Fig. 4) und eine in Draufsicht senkrecht zur Mittellinie m_{R}* sowie zwischen den blockaußenseitigen Begrenzungskanten kₐ ermittelte, konstante Breite b_{R} von 5,00 mm bis 12,00 mm, insbesondere von 5,50 mm bis 10,00 mm, bevorzugt von bis zu 8,00 mm, aufweist.

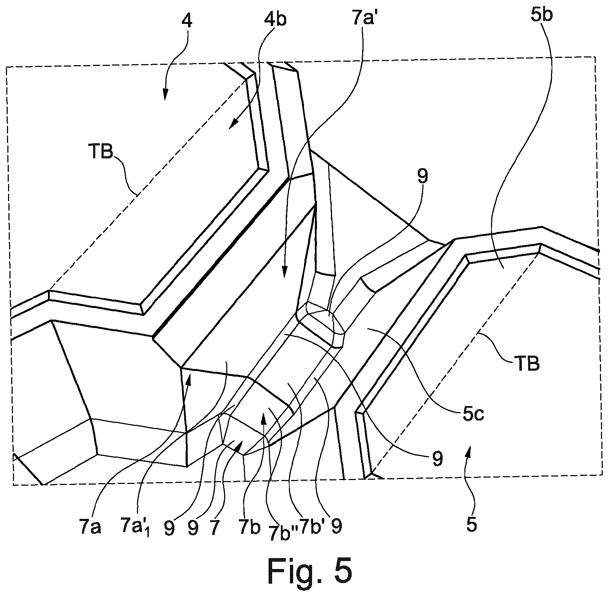

Wie Fig. 3 und Fig. 5 zeigen, setzt sich die Blockanbindung 7, in Draufsicht betrachtet (Fig. 3), senkrecht zur Erstreckung der Mittellinie m_{R}* der Rillenverengung R* aus einem an den trapezförmigen Blockrandbereich 4b des halbmittigen Profilblocks 4 angrenzenden, von diesem vorspringenden, also abragenden, abgeschrägten Blockansatz 7a und einer am trapezförmigen Blockrandbereich 5b des schulterseitigen Profilblocks 5 angrenzenden, zwischen dem abgeschrägten Blockansatz 7a und dem trapezförmigen Blockrandbereich 5b ausgebildeten Grundanhebung 7b zusammen.

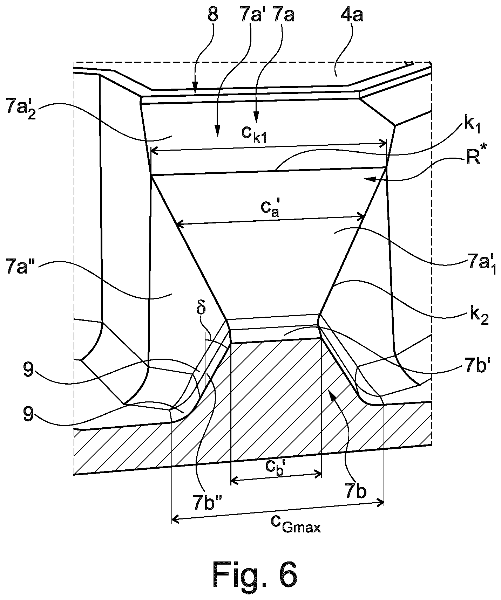

Gemäß Fig. 6 weist die Grundanhebung 7b, in in Draufsicht parallel zur Mittellinie m_{R}* verlaufenden Schnitten betrachtet (vergl. Lage der Linie VI-VI in Fig. 3), die Form eines Trapezes, insbesondere einen gleichschenkeligen Trapezes, mit einer am Niveau der Profiltiefe T_{R} (vergl. Fig. 2 iVm Fig. 3) liegenden Trapezbasis und ferner - wie Fig. 3 zeigt - in Draufsicht betrachtet, eine parallel zur Mittellinie m_{R}* ermittelte, an der Trapezbasis vorliegende, maximale Länge c_{Gmax} (Länge an der längsten Stelle, vergl. Fig. 6) von 4,00 mm bis 10,00 mm, insbesondere von 6,00 mm bis 8,00 mm, auf. Wie Fig. 6 ferner zeigt, ist die Grundanhebung 7b durch eine die kurze Grundseite des Trapezes bildende Deckfläche 7b' und zwei je einen Trapezschenkel bildende Seitenflächen 7b" begrenzt.

Die Deckfläche 7b' verläuft gemäß Fig. 4, in in Draufsicht senkrecht zur Mittellinie m_{R}* verlaufenden Schnitten betrachtet (vergl. Lage der Linie **IV-IV** in Fig. 3), gerade sowie zur radialen Richtung unter einem von 90° um bis zu 5° abweichenden Winkel, wobei dieser Winkel beim Ausführungsbeispiel 90° beträgt. Ferner verläuft die Deckfläche 7b' gemäß Fig. 6, in in Draufsicht parallel zur Mittellinie m_{R}* verlaufenden Schnitten betrachtet (vergl. Lage der Linie VI-VI in Fig. 3), gerade sowie parallel zu den Blockaußenflächen 4a, 5a. Die Deckfläche 7b' weist zum Niveau der Profiltiefe T_{R} einen in radialer Richtung sowie als kleinstmöglichen Abstand ermittelten, beim Ausführungsbeispiel konstanten Abstand a_{b}' (Fig. 4) von 2,00 mm bis 5,00 mm, insbesondere von 3,00 mm bis 4,00 mm auf, liegt gemäß Fig. 3, in Draufsicht betrachtet, zwischen den Begrenzungslinien L_{R}* und weist ferner eine in Draufsicht parallel zur Mittellinie m_{R}* gemessene und - je nach Ausgestaltung zusätzlich auch entlang der Mittellinie m_{R}* gemessene - Länge c_{b}' (Fig. 6) von 40% bis 60%, insbesondere von 45% bis 55%, der maximalen Länge c_{Gmax} der Grundanhebung 7b auf. Der Abstand a_{b}' und die Profiltiefe T_{R} sind vorzugsweise derart aufeinander abgestimmt, dass der Abstand a_{b}' zusätzlich höchstens 50%, insbesondere höchstens 40%, vorzugsweise höchstens 35%, der Profiltiefe T_{R} beträgt. "Zusätzlich" bedeutet ergänzend zu den in Millimeter angegebenen Bereichen des Abstands a_{b}'.

Die Seitenflächen 7b" verlaufen gemäß Fig. 6, in in Draufsicht parallel zur Mittellinie m_{R}* verlaufenden Schnitten betrachtet, zur radialen Richtung jeweils unter einem konstanten Winkel δ und können gemäß Fig. 3, in Draufsicht betrachtet, vor der jeweiligen Begrenzungslinie L_{R}* enden oder über diese hinausverlaufen.

Wie Fig. 6 ferner zeigt, ist der abgeschrägte Blockansatz 7a durch eine vom Niveau der Blockaußenfläche 4a ausgehende, beim Ausführungsbeispiel daher vom radial inneren Ende der an der Rillenverengung R* liegenden Mikrorippe 8 ausgehende, in Richtung zur Deckfläche 7b' der Grundanhebung 7b verlaufende Ansatzflanke 7a' und zwei durch die Ansatzflanke 7a' voneinander getrennte, in Draufsicht zur Mittellinie m_{R}* schräggestellte, viereckige Ansatzseitenflächen 7a" mitbegrenzt (vergl. Fig. 3).

Die Ansatzflanke 7a' setzt sich aus einem radial inneren Ansatzflankenabschnitt 7a'₁ und einem radial äußeren Ansatzflankenabschnitt 7a'₂ zusammen, wobei die Ansatzflankenabschnitte 7a'₁, 7a'₂ an einer in Draufsicht gerade verlaufenden Anschlusskante k₁ (vergl. Fig. 3) aneinander anschließen. Die Anschlusskante k₁ verläuft in einer gegenüber dem Niveau der Blockaußenflächen 4a, 5a in radialer Richtung ermittelten, konstanten Tiefe tₖ₁ (Fig. 4) von 2,00 mm bis 3,0 mm und weist eine Länge cₖ₁ (Fig. 6) von 80% bis 120%, insbesondere von 90% bis 110%, der maximalen Länge c_{Gmax} der Grundanhebung 7b auf. Der radial innere Ansatzflankenabschnitt 7a'₁ weist die Form eines gleichschenkeligen Trapezes auf, wobei die Trapezbasis von der Anschlusskante k₁ gebildet ist, die kürzere Grundseite des Trapezes an der Deckfläche 7b' der Grundanhebung 7 liegt und die Trapezschenkel von zwei gerade verlaufenden Anschlusskanten k₂ gebildet sind, über welche der radial inneren Ansatzflankenabschnitt 7a'₁ an die beiden Ansatzseitenflächen 7a" anschließt. Der radial innere Ansatzflankenabschnitt 7a'₁ weist ferner eine zwischen den Anschlusskanten k₂ gemessene, parallel zur Blockaußenfläche 4a sowie in Draufsicht parallel zur Mittellinie m_{R}* der Rillenverengung R* ermittele Länge cₐ' auf, welche ausgehend von der Anschlusskante k₁ fortlaufend und kontinuierlich in Richtung zur Grundanhebung 7b abnimmt (vergl. Fig. 3). Gemäß Fig. 4 verläuft der radial innere Ansatzflankenabschnitt 7a'₁, im in Draufsicht senkrecht zur Mittellinie m_{R}* verlaufenden Querschnitt betrachtet (vergl. Lage der Linie IV-IV in Fig. 3), zur radialen Richtung unter einem Winkel ε₁ von 10° bis 30°, insbesondere von 13° bis 26°, bevorzugt von 14° bis 25°. Der radial äußere Ansatzflankenabschnitt 7a'₂ verläuft, im zuletzt erwähnten Querschnitt betrachtet, zur radialen Richtung unter einem Winkel ε₂, welcher um 5° bis 30°, insbesondere von 7° bis 20°, bevorzugt 10° bis 15°, größer ist als der Winkel ε₁.

Die bereits erwähnte, maximale Länge c_{b} (Fig. 3) der trapezförmigen Blockrandbereiche 4b, 5b beträgt 120% bis 180%, insbesondere 130% bis 165%, der Länge c_{K1} (Fig. 6) der Anschlusskante k₁.

Gemäß Fig. 4 ist Rillenverengung R*, im in Draufsicht senkrecht zur ihrer Mittellinie m_{R}* sowie im Bereich der Deckfläche 7b' der Grundanhebung 7b verlaufenden Querschnitten betrachtet (vergl. Lage der Linie IV-IV in Fig. 3), an der einen Seite ihrer Mittelfläche f_{R}* durch die Ansatzflanke 7a', also deren Ansatzflankenabschnitte 7a'₁, 7a'₂, an der anderen Seite ihrer Mittelfläche f_{R}* durch eine am trapezförmigen Blockrandbereich 5b (Fig. 3) des schulterseitigen Profilblocks 5 ausgebildete Blockflanke 5c (vergl. Fig. 3 und Fig. 5) und ferner durch die sich im Bereich zwischen der Ansatzflanke 7a' und der Blockflanke 5c erstreckende Deckfläche 7b' der Grundanhebung 7b begrenzt. Die Blockflanke 5c verläuft, in den zuletzt erwähnten Querschnitten betrachtet, gerade sowie zur radialen Richtung unter einem konstanten Winkel η von 10° bis 30°, insbesondere von 13° bis 26°, bevorzugt von 14° bis 25°, wobei der Winkel η vom Winkel ε₁ des radial inneren Ansatzflankenabschnitts 7a'₁ vorzugsweise um höchstens 5° abweicht, besonders bevorzugt mit diesem übereinstimmt.

Beim gezeigten Ausführungsbeispiel ist zwischen der Deckfläche 7b' der Grundanhebung 7b und dem radial inneren Ansatzflankenabschnitt 7a'₁ sowie zwischen der Deckfläche 7b' der Grundanhebung 7b und der Blockflanke 5c je eine Übergangsrundung 9 ausgebildet (Fig. 4, Fig. 5). Weitere Übergangsrundungen 9 verlaufen zwischen den radial inneren Enden der Seitenfläche 7b" zum Niveau der Profiltiefe T_{R}* sowie zwischen den Seitenflächen 7b" zu den Ansatzseitenflächen 7a" (Fig, 5, Fig. 6).

Die Erfindung ist auf das beschriebene Ausführungsbeispiel nicht beschränkt.

Die Mikrorippen 8 sind optional, sodass die die Rillenverengung R* an ihrer radial äußeren Peripherie begrenzenden, blockaußenseitigen Begrenzungskanten kₐ direkt an der Blockaußenfläche 4a bzw. 5a liegen und die blockaußeninnenseitigen Begrenzungskante k_{b} nicht vorhanden sind. Der Laufstreifen weist zumindest zwei nebeneinander verlaufende Profilblockreihen auf, wobei Profilblöcke aus der einen Profilblockreihe über Blockanbindung an Profilblöcke aus der benachbarten Profilblockreihe angebunden sind. Die Profilblöcke können frei von trapezförmigen Blockrandbereichen 4b, 5b sein. Die Rillenverengung R* kann - bei entsprechend ausgeführten Begrenzungskanten kₐ eine in Draufsicht durchgehend einseitig gebogen (kreisbogenförmig) verlaufende Mittellinie m_{R}* aufweisen. Die in Draufsicht senkrecht zur Mittellinie m_{R}* verlaufende Richtung bezieht sich bei einer durchgehend einseitig gebogen verlaufenden Mittellinie m_{R}* auf eine lokal an die Mittellinie m_{R}* angelegte Tangente.

### Bezugszeichenliste

- 1: zentrale Profilrippe
- 2: halbmittige Profilblockreihe
- 3: schulterseitige Profilblockreihe
- 4: halbmittiger Profilblock
- 4a: Blockaußenfläche
- 4b: trapezförmiger Blockrandbereich
- 5: schulterseitiger Profilblock
- 5a: Blockaußenfläche
- 5b: trapezförmiger Blockrandbereich
- 5c: Blockflanke
- 6, 6': Querrille
- 6a: Rillengrund
- 7: Blockanbindung
- 7a: abgeschrägter Blockansatz
- 7a': Ansatzflanke
- 7a'₁: radial innere Ansatzflankenabschnitt
- 7 a'₂: radial äußerer Ansatzflankenabschnitt
- 7a": Ansatzseitenfläche
- 7b: Grundanhebung
- 7b': Deckfläche
- 7b": Seitenfläche
- 8: Mikrorippe
- 9: Übergangsrundung
- A-A: Linie (Reifenäquatorialebene)
- a_{b}: Abstand
- b_{MR}, b_{R}: Breite
- b_{b}, b_{QR}: maximale Breite
- c₁, c₂, cₐ', c_{b}', cₖ₁: Länge
- c_{b}, c_{Gmax}: maximale Länge
- f_{R}*: Mittelfläche
- h_{MR}: maximale Höhe
- K: Knickstelle
- kₐ: blockaußenseitige Begrenzungskante
- k_{b}: blockinnenseitige Begrenzungskante
- k₁, k₂: Anschlusskante
- L: Linie (seitlicher Rand der Bodenaufstandsfläche)
- L₁, L₂, L_{R}*: Begrenzungslinie
- m_{QR}: Rillenmittellinie
- m_{R}*: Mittellinie
- M: Makroblockstruktur
- R: Rillenabfolge
- R*: Rillenverengung
- S₅: Pfeil (Sichtrichtung)
- TB: Trapezbasis
- tₖ₁: Tiefe
- T_{R}: Profiltiefe
- Z₃: Detail
- α, β, γ, δ, ε₁, ε₂, η: Winkel

## Patentansprüche

1. Fahrzeugreifen mit einem Laufstreifen mit zumindest zwei in axialer Richtung nebeneinander verlaufenden Profilblockreihen (2, 3) mit jeweils in Umfangsrichtung aufeinanderfolgenden Profilblöcken (4, 5), welche von zumindest abschnittsweise auf die Profiltiefe (T_{R}) reichenden, rillenartigen Profilnegativen (R, 6, 6') begrenzt und voneinander getrennt sind, wobei Profilblöcke (4, 5) aus der einen Profilblockreihe (2, 3) mittels Blockanbindungen (7) an Profilblöcke (4, 5) aus der anderen Profilblockreihe (2, 3) angebunden sind, wobei radial außerhalb jeder Blockanbindung (7) von den rillenartigen Profilnegativen (R) eine Rillenverengung (R*) verbleibt, welche an ihrer radial äußeren Peripherie am Profilblock (4, 5) aus der einen Profilblockreihe (2, 3) und am Profilblock (4, 5) aus der anderen Profilblockreihe (2, 3) jeweils eine knickfrei verlaufende Begrenzungskante (kₐ) sowie ferner eine zu den Begrenzungskanten (kₐ) in Draufsicht übereinstimmend beabstandete, insbesondere gerade verlaufende Mittellinie (m_{R}*) aufweist,
wobei die Blockanbindung (7) eine Grundanhebung (7b) mit einer Deckfläche (7b') umfasst, welche, im in Draufsicht senkrecht zur Mittellinie (m_{R}*) der Rillenverengung (R*) verlaufenden Schnitten betrachtet, gerade sowie zur radialen Richtung unter einem von 90° um bis zu 5° abweichenden Winkel verläuft, **dadurch gekennzeiehnet,**
dass die Blockanbindung (7), in Draufsicht betrachtet, senkrecht zur Erstreckung der Mittellinie (m_{R}*) der Rillenverengung (R*) aus der Grundanhebung (7b) und einem an den einen Profilblock (4) angrenzenden, von diesem vorspringenden, abgeschrägten Blockansatz (7a) gebildet ist,
wobei die Rillenverengung (R*), in in Draufsicht senkrecht zu ihrer Mittellinie (m_{R}*) sowie im Bereich der Deckfläche (7b') der Grundanhebung (7b) verlaufenden Querschnitten betrachtet, am abgeschrägten Blockansatz (7a) durch eine Ansatzflanke (7a') begrenzt ist, welche aus einem gerade sowie zur radialen Richtung unter einem ersten Winkel (ε₁) verlaufenden, radial inneren Ansatzflankenabschnitt (7a'₁) und einem aus einem gerade sowie zur radialen Richtung unter einem zweiten Winkel (ε₂) verlaufenden, radial äußeren Ansatzflankenabschnitt (7a'₂) zusammengesetzt ist, wobei der erste Winkel (ε₁) 10° bis 30° beträgt und der zweite Winkel (ε₂) um 5° bis 30° größer ist als der erste Winkel (ε₁).

2. Fahrzeugreifen nach Anspruch 1, **dadurch gekennzeichnet, dass** der erste Winkel (ε₁), unter welchem der radial inneren Ansatzflankenabschnitt (7a'₁) verläuft, 13° bis 26°, insbesondere 14° bis 25°, beträgt.

3. Fahrzeugreifen nach Anspruch 1 oder 2, **dadurch gekennzeichnet, dass** der zweite Winkel (ε₂), unter welchem der radial äußere Ansatzflankenabschnitt (7a'₂) verläuft, um 7° bis 20°, insbesondere um 10° bis 15°, größer ist als der erste Winkel (ε₁), unter welchem der radial innere Ansatzflankenabschnitt (7a'₁) verläuft.

4. Fahrzeugreifen nach einem der Ansprüche 1 bis 3, **dadurch gekennzeichnet, dass** die Rillenverengung (R*) eine in Draufsicht senkrecht zur Mittellinie (m_{R}*) sowie zwischen ihren Begrenzungskanten (kₐ) ermittelte, insbesondere konstante Breite (b_{R}) von 5,00 mm bis 12,00 mm, vorzugsweise von 5,50 mm bis 10,00 mm, besonders bevorzugt von bis zu 8,00 mm, aufweist.

5. Fahrzeugreifen nach einem der Ansprüche 1 bis 4, **dadurch gekennzeichnet, dass** die Grundanhebung (7b), in Draufsicht betrachtet, eine parallel zur Mittellinie (m_{R}*) der Rillenverengung (R*) ermittelte, an ihrem radial inneren Ende vorliegende, maximale Länge (c_{Gmax}) von 4,00 mm bis 10,00 mm, insbesondere von 6,00 mm bis 8,00 mm, aufweist.

6. Fahrzeugreifen nach Anspruch 5, **dadurch gekennzeichnet, dass** die Deckfläche (7b') der Grundanhebung (7), in Draufsicht betrachtet, eine parallel zur Mittellinie (m_{R}*) der Rillenverengung (R*) ermittelte Länge (c_{b}') von 40% bis 60%, insbesondere von 45% bis 55%, der maximalen Länge (c_{Gmax}) der Grundanhebung (7b) aufweist.

7. Fahrzeugreifen nach einem der Ansprüche 1 bis 6, **dadurch gekennzeichnet, dass** die Deckfläche (7b') der Grundanhebung (7b) zum Niveau der Profiltiefe (T_{R}) einen in radialer Richtung als kleinstmöglichen Abstand ermittelten, insbesondere konstanten Abstand (a_{b}') von 2,00 mm bis 5,00 mm, bevorzugt von 3,00 mm bis 4,0 mm, aufweist, wobei der Abstand (a_{b}') zusätzlich insbesondere höchstens 50%, vorzugsweise höchstens 40%, besonders bevorzugt höchstens 35%, der Profiltiefe (T_{P}) beträgt.

8. Fahrzeugreifen nach einem der Ansprüche 1 bis 7 bzw. einem der Ansprüche 5 bis 7, **dadurch gekennzeichnet, dass** der radial innere Ansatzflankenabschnitt (7a'₁) und der radial äußere Ansatzflankenabschnitt (7a'₂) an einer in Draufsicht gerade verlaufenden Anschlusskante (k₁) aneinander anschließen,
- welche in einer gegenüber dem Niveau der Blockaußenflächen (4a, 5a) der Profilblöcke (4, 5) in radialer Richtung ermittelten Tiefe (tₖ₁) von 2,00 mm bis 3,00 mm verläuft und/oder
- welche eine Länge (cₖ₁) von 80% bis 120%, insbesondere von 90% bis 110%, der maximalen Länge (c_{Gmax}) der Grundanhebung (7b) aufweist.

9. Fahrzeugreifen nach einem der Ansprüche 1 bis 8, **dadurch gekennzeichnet, dass** der radial innere Ansatzflankenabschnitt (7a'₁) die Form eines Trapezes, insbesondere eines gleichschenkeligen Trapezes, aufweist, wobei die Trapezbasis am radial äußeren Ansatzflankenabschnitt (7a'₂) liegt und die kürzere Grundseite des Trapezes der Deckfläche (7b') der Grundanhebung (7b) zugewandt ist.

10. Fahrzeugreifen nach einem der Ansprüche 1 bis 9, **dadurch gekennzeichnet, dass** die Grundanhebung (7b) durch die Deckfläche (7b') sowie an diese anschließende und ausgehend von dieser in Richtung zum Niveau der Profiltiefe (T_{R}) verlaufende Seitenflächen (7b") begrenzt ist und
dass der abgeschrägte Blockansatz (7a) durch die Ansatzflanke (7a') und zwei jeweils zwischen dem radial inneren Ansatzflankenabschnitt (7a'₁) und den Seitenflächen (7b") der Grundanhebung (7b) verlaufenden Ansatzseitenflächen (7a") mitbegrenzt bzw. begrenzt ist.

11. Fahrzeugreifen nach einem der Ansprüche 1 bis 10, **dadurch gekennzeichnet, dass** der Winkel, unter welchem die Deckfläche (7b') der Grundanhebung (7b), im in Draufsicht senkrecht zur Mittellinie (m_{R}*) der Rillenverengung (R*) verlaufenden Schnitten betrachtet, verläuft, 90° beträgt.

12. Fahrzeugreifen nach einem der Ansprüche 1 bis 11, **dadurch gekennzeichnet, dass** die Rillenverengung (R*) zwischen zwei in Draufsicht vorspringenden, trapezförmigen Blockrandbereichen (4b, 5b) mit blockinnenseitig liegenden Trapezbasen (TB) verläuft, wobei die Begrenzungskanten (kₐ) der Rillenverengung (R*) den Trapezbasen (TB) gegenüberliegen.

13. Fahrzeugreifen nach einem der Ansprüche 1 bis 12 bzw. einem der Ansprüche 8 bis 12, **dadurch gekennzeichnet, dass** die trapezförmigen Blockrandbereiche (4b, 5b), in Draufsicht betrachtet,
- eine senkrecht zur zugehörigen Trapezbasis (TB) sowie zwischen der Trapezbasis (TB) und der Begrenzungskante (kₐ) der Rillenverengung (R*) ermittelte, maximale Breite (b_{b}) von 2,00 mm bis 4,00 mm und/oder
- eine entlang der Trapezbasis (TB) ermittelte, maximale Länge (c_{b}) von 120% bis 180%, insbesondere von 130% bis 165%, der Länge (c_{K1}) der Anschlusskante (k₁) aufweisen.

14. Fahrzeugreifen nach einem der Ansprüche 1 bis 13, **dadurch gekennzeichnet, dass** die Rillenverengung (R*), im in Draufsicht senkrecht zu ihrer Mittellinie (m_{R}*) sowie im Bereich der Deckfläche (7b') der Grundanhebung (7b) verlaufenden Querschnitten betrachtet, am anderen Profilblock (5) durch eine dem abgeschrägten Blockansatz (7a) gegenüberliegende Blockflanke (5c) begrenzt ist, welche gerade sowie zur radialen Richtung unter einem konstanten Winkel (η) von 10° bis 30°, insbesondere von 13° bis 26°, bevorzugt von 14° bis 25°, verläuft, wobei der Winkel (η), unter welchem die Blockflanke (5c) verläuft, vom ersten Winkel (ε₁), unter welchem der radial inneren Ansatzflankenabschnitt (7a'₁) verläuft, vorzugsweise um höchstens 5° abweicht, besonders bevorzugt mit diesem übereinstimmt.

15. Fahrzeugreifen nach einem der Ansprüche 1 bis 14, **dadurch gekennzeichnet, dass** die zwei Profilblockreihen (2, 3) eine halbmittige Profilblockreihe (2) mit halbmittigen Profilblöcken (4) und eine schulterseitige Profilblockreihe (3) mit schulterseitigen Profilblöcken (5) sind, wobei der abgeschrägte Blockansatz (7a) der Blockanbindung (7) an einen halbmittigen Profilblock (4) angrenzt und wobei bevorzugt halbmittige Profilblöcke (4) vorgesehen sind, welche jeweils an zwei schulterseitige Profilblöcke (5) mit je einer der Blockanbindungen (7) angebunden sind.
